# EUROPÄISCHE PATENTANMELDUNG

(11) **EP 1 714 547 A1**
(43) Veröffentlichungstag der Anmeldung: **25.10.2006**
(21) Anmeldenummer: 06004406.2
(22) Anmeldetag: 03.03.2006
(51) Int. Cl.: A01K 1/12

(54) **Verfahren und Vorrichtung zum Bereitstellen wenigstens einer Information über eine Melkplatzbelegung in einer Melkanlage**

(30) Priorität: 03.03.2005 DE 102005009741
(71) Anmelder: WestfaliaSurge GmbH, 59199 Bönen (DE)
(72) Erfinder: Kaever, Peter, 59302 Oelde (DE); Pohlkamp, Manfred, 59302 Oelde (DE)
(74) Vertreter: Neumann, Ditmar

(57) **Zusammenfassung**

Zum Bereitstellen wenigstens einer Information über eine Melkplatzbelegung in einer Melkanlage mit wenigstens zwei Melkplätzen, die auf einer beweglichen Plattform angeordnet sind, wird ein Verfahren vorgeschlagen, nach dem eine Erfassung einer Tierbewegung eines Tieres aus einem Erkennungsbereich in Richtung eines Melkplatzes erfolgt.

## Beschreibung

Der Gegenstand der Erfindung bezieht sich auf ein Verfahren zum Bereitstellen wenigstens einer Information über eine Melkplatzbelegung, eine Vorrichtung zum Bereitstellen wenigstens einer Information über eine Melkplatzbelegung sowie auf eine Melkanlage mit wenigstens zwei Melkplätzen.

Obwohl im folgenden die Erfindung im Bezug auf die Verwendung in Karussell-Melkanlagen beschrieben wird, so wird darauf hingewiesen, dass der Gegenstand der Erfindung auch mit anderen beweglichen Transporteinrichtungen eingesetzt werden kann. Das erfindungsgemäße Verfahren kann auch bei anderen Melkanlagen eingesetzt werden, z. B. bei Melkanlagen, bei denen die zu melkenden Tiere auf einem Förderband positioniert werden, um diese z. B. während eines Melkvorgangs von einem Eingang zum Ausgang verfahren zu können. Das erfindungsgemäße Verfahren ist auch für Autotandemmelkstände geeignet.

Die Erfindung eignet sich nicht nur zur Verwendung in Melkanlagen zum Melken von Kühen, sondern auch zum Melken von anderen Milch abgebenden Tieren, wie beispielsweise Ziegen, Schafen, Stuten, Eseln, Kamelen, Dromedaren, Yaks, Elchen, oder dergleichen mehr.

Zum Melken von Tieren, insbesondere zum Melken von Kühen sind Karussell-Melkanlagen bekannt. Die Ausbildung solcher Karussell-Melkanlagen kann unterschiedlich sein. So ist beispielsweise durch die DE 26 50 741 A1 eine Karussell-Melkanlage mit mehreren Melkplätzen bekannt. Die Melkplätze sind Seite an Seite angeordnet. Bei dieser Melkanlage handelt es sich um eine so genannte Side by Side Karussell-Melkanlage. Die Tiere werden radial einwärts zu den Melkplätzen geführt. Hierzu wird ein Gatter, welches den Eintritt in den Melkplatz ermöglicht, nach oben gezogen. Nachdem die Kuh den Melkplatz betreten hat, wird das Gatter wieder heruntergefahren. Die Plattform wird mit den einzelnen Melkplätzen weiter verfahren.

Eine weitere Ausgestaltung einer Karussell-Melkanlage ist beispielsweise durch die DE 41 01 530 A1 bekannt. Die dort beschriebene Karussell-Melkanlage weist eine drehbar angeordnete Plattform auf, auf der mehrere Melkplätze ausgebildet sind. Die Plattform ist segmentiert ausgebildet. Sie wird beispielsweise durch mehrere Hydraulikmotoren und eine durch einen Elektromotor angetriebene Hydraulikpumpe angetrieben.

Im Zuge der Automatisierung des Melkens sowie der Überwachung der Tiere, insbesondere hinsichtlich ihrer Gesundheit und Milchleistung ist bekannt, dass die Tiere mit einer Tiererkennungseinheit versehen sind. Die Tiererkennungseinheit kann einen Speicher enthalten, in dem eine Vielzahl von Informationen über das Tier enthalten sind.

Um eine sichere Zuordnung der während eines Melkvorgangs gewonnen Daten zu einem Tier vornehmen zu können, ist die Kenntnis darüber notwendig, auf welchem Platz sich das Tier befindet. Eine Positionserkennung kann beispielsweise durch Platzresponder realisiert werden. Die Platzresponder sind an den einzelnen Melkplätzen der Anlage angeordnet. Eine Vorbeifahrantenne ordnet die Platzresponder beim Vorbeifahren. Der Respondercode des Platzes wird an einen Rechner übermittelt und dem jeweiligen Platz zugeordnet.

Im Hinblick darauf, dass die Auflösung der Platzerkennung relativ gering ist, wurden zusätzliche Sensoren zur Erfassung gewisser kritischer Punkte angebaut, wobei es sich beispielsweise bei den Sensoren um Lichttaster handeln kann.

Eine solche Anordnung von Sensoren an kritischen Punkten ist durch die EP-A1-0 717 590 bekannt. Diese Sensoren bilden einen Teil einer Steuer- und Antriebseinrichtung für eine Karussell-Melkanlage. Nach der EP-A1-0 717 590 ist zur Überwachung der Melkposition ein erster Kontrollpunkt vorgesehen. In Drehrichtung betrachtet, ist nach dem ersten Kontrollpunkt ein zweiter Kontrollpunkt angeordnet. Die Drehzahl der Plattform ist durch die Steuer- und Antriebseinrichtung so eingestellt, dass am ersten Kontrollpunkt die überwiegende Anzahl der Melkzeuge noch nicht abgezogen und am zweiten Kontrollpunkt die überwiegende Anzahl der Melkzeuge abgezogen ist.

Um die Zuordnung eines Tieres zu einem Melkplatz einer Karussell-Melkanlage vornehmen zu können, ist im Zugangsweg der Karussell-Melkanlage eine Eingangstür vorgesehen. Vor dieser Eingangstür erfolgt die Erkennung des Tieres. Nach der Erkennung des Tieres und der Identifizierung des für dieses Tier vorgesehenen Melkplatzes öffnet die Tür, wenn sich der Melkplatz vor dem Zugang befindet, so dass das Tier diesen Melkplatz betreten kann. Die Tür schließt den Zugang, so dass das nachfolgende Tier angehalten wird.

Problematisch bei einer derartigen Verfahrensführung ist, dass jedes einzelnes Tier vor der Tür angehalten werden muss, damit eine sichere Zuordnung von Melkplatz und dem an diesem Melkplatz gemolkenen Tier möglich ist. Dies führt zu einem reduzierten Durchsatz pro Zeiteinheit und damit zu längeren Melkzeiten. Das Öffuen und das Schließen der Tür geht mit einer Geräuschentwicklung und mit einem Verschleiß einher.

Es sind daher Karussell-Melkanlagen entwickelt worden, die einen türlosen Zugangsweg aufweisen bzw. deren Tür in bestimmten Melkphasen außer Funktion gesetzt wird. Die Erkennung des Tieres erfolgt bei derartigen Karussell-Melkanlagen im Zugangsweg. Hierdurch kann nicht eindeutig festgestellt werden, ob ein Tier den vorgesehenen Melkplatz auch tatsächlich einnimmt. Es besteht daher z. B. die Gefahr einer falschen Zuordnung eines Tieres auf einen Platz. Hierdurch bedingt kann nicht verkehrsfähige Milch eines Tieres, die eigentlich verworfen werden soll, dennoch zu der verkehrsfähigen Milch geleitet werden, da das Tier nicht den für das Tier vorgesehen Melkplatz sondern einen anderen Platz einnahm. Dieser Umstand kann dazu führen, dass die gesamte verwertbare Milch verworfen werden muss.

Durch die WO 02/03783 ist bereits ein Verfahren bekannt geworden, welches zur Identifikation eines Melkplatzes und eines Tieres, insbesondere eine Kuh am Melkplatz eine Karussell-Melkanlage mit einer Mehrzahl von angeordneten Melkplätzen, die auf einer drehbaren Melkplattform angeordnet sind, vorgeschlagen worden ist, bei dem ein Tier mit einer Tiererkennungseinheit zu einem Melkplatz gelangt. Es erfolgt eine Erkennung des Tieres und des Melkplatzes, in dem sich das Tier befindet, wobei die Erkennungsdaten des Tieren und des Melkplatzes an eine Datenverarbeitungsanlage geleitet und dort ausgewertet werden. Konkret wird vorgeschlagen, dass die Melkplattform mit dem Tier an einer ortsfesten Einheit zur Tiererkennung, die in Drehrichtung der Melkplattform betrachtet, dem Zugangsweg nachgeordnet ist, vorbeibewegt wird. Hierdurch wird eine eindeutige Zuordnung eines Tieres zu einem Melkplatz erreicht, da die Tiererkennung erst dann erfolgt, wenn das Tier den Melkplatz bereits belegte. Zusätzlich zur Identifikation des Tieres erfolgt auch eine Erkennung des Melkplatzes durch eine Einheit zur Melkplatzerkennung. Bei diesem Verfahren kommt es zu einigen Plätzen im Eingangsbereich, auf denen die Tiere noch nicht erkannt sind. Dies ist nachteilig für die Arbeitsergonomie, da der Austrittbereich nahe am Eintritt liegen sollte.

Hiervon ausgehend liegt der Erfindung die Aufgabe zu Grunde, ein Verfahren zum Bereitstellen wenigstens einer Information über eine Melkplatzbelegung in einer Melkanlage mit wenigstens zwei Melkplätzen vorzuschlagen, durch das eine höhere Zuordnungssicherheit zu einem frühen Zeitpunkt erreicht wird.

Diese Aufgabe wird erfindungsgemäß durch ein Verfahren mit dem Merkmal des Anspruchs 1 gelöst. Vorteilhafte Weiterbildungen und Ausgestaltungen des Verfahrens sind Gegenstand der abhängigen Ansprüche.

Das erfindungsgemäße Verfahren zum Bereitstellen wenigstens einer Information über eine Melkplatzbelegung in einer Melkanlage mit wenigstens zwei Melkplätzen, die auf einer beweglichen Plattform angeordnet sind, zeichnet sich dadurch aus, dass eine Bewegung eines Tieres aus einem Erkennungsbereich in Richtung eines Melkplatzes erfasst wird. In Abkehr von den bisher bekannten Verfahren zur Bestimmung der Melkplatzbelegung wird die Zuordnung von der Bewegung eines Tieres und nicht von der Bewegung bzw. der Position der Plattform ausgehend gesteuert. Durch diese erfindungsgemäße Konzeption können Sensoren zur Erfassung kritischer Positionen eines Tieres eingesetzt werden. In Abhängigkeit von den Signalen dieser Sensoren ist es möglich, die Information "Tier betritt die Plattform" mit der Position der Plattform so in Verbindung zu bringen, dass eine Melkplatzbelegung, d. h. eine Zuordnung des Tieres auf einem Platz auf der Plattform mit höherer Sicherheit bestimmt werden kann.

Insbesondere wird vorgeschlagen, dass der Zeitpunkt erfasst wird, in dem ein Tier einen Erkennungsbereich in Richtung eines Melkplatzes verlässt. Der Zeitpunkt kann in eine Korrelation mit der Bewegung der Plattform gebracht werden, so dass hieraus der Platz bestimmt werden kann, welcher von dem Tier belegt wird.

Die Erfassung der Bewegung eines Tieres aus einem Erkennungsbereich in Richtung eines Melkplatzes kann mittels unterschiedlicher Positions- und/oder Bewegungssensoren erfolgen. Unter einem Sensor wird sowohl ein Sensorelement als auch ein komplexes Systems verstanden, welches zur Erfassung der Bewegung eines Tieres aus einem Erkennungsbereich in Richtung eines Melkplatzes geeignet ist. Bevorzugt ist dabei ein Verfahren, bei dem die Bewegung eines Tieres optisch, insbesondere mittels eines Kamerasystems erfolgt. Die optische Erfassung kann auch mittels einfacher Lichtschranken verwirklicht werden.

Insbesondere wird vorgeschlagen, dass eine Erfassung der Bewegung eines Tieres aus einem Erkennungsbereich in Richtung eines Melkplatzes mittels einer Erkennungseinheit erfolgt, wobei diese wenigstens einen Sender und wenigstens einen Empfänger aufweist. Bevorzugt ist hierbei eine Ausgestaltung bei der ein Sender am Tier angeordnet ist, der vorzugsweise auch tierindividuelle Informationen übermittelt. Dabei ist die Vewendung von tierindividuell angebrachten Marken (z. B. Radiofrequenz-Label) eine hierfür besonders geeignete Möglichkeit.

Durch das erfindungsgemäße Verfahren werden gerade frühzeitig nach dem Betreten der Plattform durch ein Tier die zutreffenden Tierinformationen zur Verfügung gestellt, um gegebenenfalls Tieraktionen am Tier richtig durchzuführen. Diese Tieraktionen können automatisch stattfinden. Es besteht auch die Möglichkeit die Tieraktionen, welche durchgeführt werden sollen, einer Bedienperson optisch und/oder akustisch anzuzeigen. Bei den Tieraktionen kann es sich beispielsweise um ein Behandeln eines Tieres handeln.

Weitere Vorteile des Verfahrens ergeben sich auch dadurch, dass eine Position der Plattform und/oder Melkplätze zum Zeitpunkt, in dem ein Tier einen Erkennungsbereich in Richtung eines Melkplatzes verlässt, ermittelt wird. Hierdurch kann eine verbesserte Zuordnung eines Tieres zu einem Melkplatz erreicht werden. Darüber hinaus besteht die Möglichkeit auch leere Plätze zu erkennen. Insbesondere bei unentschlossenen Tieren, die innerhalb einer vorgegebenen Zeitspanne sich aus dem Erkennungsbereich heraus nicht bewegen, besteht die Möglichkeit, dieses zu treiben, so dass das Tier auf die Plattform geht. Bei Verwendung des hier vorgeschlagenen Verfahrens führt dies zu korrekten Zuordnungen, da erkennbar ist, ob sich das Tier bewegt.

Die Position der Plattform wird vorzugsweise durch eine Positionserfassungseinheit bestimmt. Insbesondere wird vorgeschlagen, dass die Geschwindigkeit der Plattform ermittelt wird. Die Geschwindigkeit der Plattform kann auch in Abhängigkeit von der Betrittssituation an wenigstens einem Melkplatz verändert werden. So kann beispielsweise die Geschwindigkeit erhöht werden, wenn eine Mehrzahl der Melkplätze mit Tieren belegt ist, die in einer relativ kurzen Zeit gemolken werden können. Eine Verlangsamung der Drehbewegung der Plattform kann auch notwendig sein, wenn die Melkzeiten der sich auf der Plattform befindenden Tiere dies anzeigen.

Die Bestimmung der Position der Plattform erfolgt auf der Basis von Daten wenigstens eines Sensors, welcher einer Gruppe von Sensoren entnommen ist, welche Winkelsensoren, Winkelcodierer, absolute Winkelcodierer, inkrementale Winkelcodierer, Winkelencoder, Drehgeber oder dergleichen mehr umfasst.

Gemäß einer noch weiteren vorteilhaften Ausgestaltung des Verfahrens wird vorgeschlagen, dass die Daten zur Positionsbestimmung einer Steuereinrichtung übermittelt werden.

Das erfindungsgemäße Verfahren ermöglicht eine verbesserte Zuordnung leerer und belegter Plätze, so dass diese Informationen in die Planung automatisch ablaufender Prozesse wie Reinigung und/oder Behandlung von Tieren sowie das Ansetzen der Zitzenbecher einbezogen werden können, um die verfügbare Zeit pro Automatisierungseinheit effizient zu nutzen. Darüber hinaus besteht die Möglichkeit eine Diagnose im System durchzuführen. Insbesondere durch sensorische Redundanzen wird es möglich, die Funktion der Sensoren zu überprüfen und bei Fehlfunktion dem Bediener eine Meldung über die Fehlfunktion zu geben.

Das erfindungsgemäße Verfahren ist besonders zum Einsatz in einer Karussell-Melkanlage geeignet.

Der vorliegenden Erfindung liegt auch die Zielsetzung zu Grunde eine Vorrichtung zum Bereitstellen wenigstens einer information über eine Melkplatzbeleguna in einer Melkanlage mit wenigstens zwei Melkplätzen anzugeben, welche mit einem relativ geringen technischen Aufwand realisiert werden kann.

Diese Zielsetzung wird erfindungsgemäß durch eine Vorrichtung mit dem Merkmalen des Anspruchs 16 erreicht. Vorteilhafte Weiterbildungen und Ausgestaltungen der Vorrichtung sind Gegenstand der jeweiligen abhängigen Ansprüche.

Die erfindungsgemäße Vorrichtung zum Bereitstellen wenigstens einer Information über eine Melkplatzbelegung in einer Melkanlage mit wenigstens zwei Melkplätzen, die auf einer beweglichen Plattform angeordnet sind, weist eine Einrichtung auf, die zur Erfassung einer Bewegung eines Tieres aus einem Erkennungsbereich in Richtung eines Melkplatzes geeignet und bestimmt ist. Hierdurch wird eine Vorrichtung zum Bereitstellen wenigstens einer Information verwirklicht, die mit einem konstruktiven Aufwand realisiert werden kann. Der Erkennungsbereich ist dabei vorzugsweise so angeordnet, dass beim Verlassen des Erkennungsbereiches das Tier einen Melkplatz auf der Plattform betritt.

Gemäß einer vorteilhaften Ausgestaltung der Vorrichtung wird vorgeschlagen, dass die Einrichtung Mittel zur Ermittlung eines Zeitpunktes, zu dem ein Tier sich Richtung Plattform/Melkplatz bewegt. Bevorzugt ist dabei eine Ausgestaltung, bei der eine Erzeugung von Ereignissen erfolgt und zwar zu dem Zeitpunkt, zu dem sich das Tier aus dem Erkennungsbereich in Richtung eines Melkplatzes bewegt und des Zeitpunktes, in dem ein Melkplatz dem Tier bereitsteht. Hierdurch kann eine eindeutige Zuordnung von Melkplatz und Tier erfolgen, wobei das verbindende GLied für die Bestimmung der Belegung eines Melkplatzes mit einem Tier der Zeitpunkt ist

Die Bewegung eines Tieres kann mittels einer Einrichtung ermittelt werden, die wenigstens einen Positions- und/oder Bewegungssensor aufweist. Die Ausgestaltung der Positions- und/oder Bewegungssensoren kann unterschiedlich sein. Hierbei kann es sich Näherungssensoren, optische Sensoren oder dergleichen handeln. Auch komplexe Sensorsysteme, insbesondere ein Kamerasystem ist möglich.

Die Tiere, insbesondere Kühe sind mit Identifikationsmitteln versehen. Diese Identifikationsmittel enthalten tierindividuelle Informationen. Sie können als Sender oder als Empfänger und Sender ausgebildet sein. Das Vorhanden solcher Tierlabel kann zur Bestimmung der Bewegung des Tieres genutzt werden. Insbesondere wird daher vorgeschlagen, dass die Einrichtung wenigstens eine Erkennungseinheit mit wenigstens einem Sender und wenigstens einem Empfänger aufweist. Hierbei kann die Auswertung von Information über die Feldstärke und den Typ des Labels sowie labelbezogene Kennwerte wie z. B. typische Erkennungsfeldstärken hilfreich sein. Weiter wird vorgeschlagen, die Erkennungsleistungsfähigkeit des Lesegerätes in die Auswertung einzubeziehen. Dieses Tierlabel wird im Wesentlichen dann gelesen, wenn es sich in dem Erkennungsbereich befindet. Dieser Erkennungsbereich kann von der Orientierung des Labels, vom Labeltyp und auch vom Aufenthaltsort abhängen. Der Erkennungsbereich ist räumlich abgegrenzt, so dass eine Information ableitbar ist, wann ein Tier den Erkennungsbereich verließ. Geht man beispielsweise in einem ersten Ansatz davon aus, dass Tiere sich in Richtung auf die Plattform zu bewegen, so kann diese Information dazu verwendet werden, die Zuordnung zwischen Tier und Platz auf der Plattform herzustellen.

Zusätzlich zu den Erkennungseinheiten der Tiere können im Erkennungsbereich zusätzliche Sensoren vorgesehen sein, die auch zur Erfassung der Tierbewegung geeignet sind, so dass der Moment erkannt wird, wann das Tier den Platz auf der Plattform betritt.

Da durch das Tier individuelle Informationen bereit gestellt werden, können auch Handlungen am Tier zu einem frühen Zeitpunkt durchgeführt werden, wodurch die Effizienz der Melkanlage gesteigert werden kann. Insbesondere dadurch, dass tierindividuelle Daten zu einem frühen Zeitpunkt bereitstehen, können Betriebseinheiten der Melkanlage aktiviert werden, um die Handlungen am Tier im Wesentlichen kurz nach dem Betreten des Melkplatzes durchzuführen.

Die Effektivität kann auch weiter dadurch gesteigert werden, dass Mittel vorgesehen sind, mittels derer eine Position der Plattform und/oder der Melkplätze zum Zeitpunkt, in dem ein Tier einen Erkennungsbereich in Richtung eines Melkplatzes verlässt, bestimmbar ist.

Gemäß einem noch weiteren vorteilhaften Gedanken wird vorgeschlagen, dass die Mittel wenigstens eine Positionserfassungseinheit, durch die eine Position der Plattform durch eine Positionserfassungseinheit bestimmbar ist, umfassen. Die Positionserfassungseinheit weist wenigstens einen Sensor auf, der einer Gruppe von Sensoren entnommen ist, welche Winkelsensoren, Winkelcodierer, absolut Winkelcodierer, inkremental Winkelcodierer, Winkelencoder, Drehgeber oder dergleichen mehr enthält.

Nach einem noch weiteren erfinderischen Gedanken wird eine Melkanlage mit wenigstens zwei Melkplätzen, die auf einer beweglichen Plattform angeordnet sind, vorgeschlagen, wobei die Melkanlage eine Vorrichtung zum Bereitstellen wenigstens einer Information über eine Melkplatzbelegung nach einem oder mehreren Ansprüchen 16 bis 24 sowie eine Informations-Verarbeitungseinrichtung zur Verarbeitung der wenigstens einen Information enthält. Insbesondere wird vorgeschlagen, dass die Informations-Verarbeitungseinrichtung mit einer Steuereinrichtung zusammenwirkt.

Zur Steigerung der Effizienz der Melkanlage sowie zur Verbesserung des Herdenmanagments wird vorgeschlagen, dass die Informations-Verarbeitungseinrichtung mit einem Herdenmanagement-System zusammenwirkt.

Bei der Melkanlage handelt es sich vorzugsweise um eine Karussell-Melkanlage.

Weitere Einzelheiten und Vorteile der Erfindung werden anhand des in der Zeichnung dargestellten Ausführungsbeispiels erläutert, ohne dass der Gegenstand auf dieses Ausführungsbeispiel beschränkt ist.

Es zeigt:
- Figur 1: schematisch eine Karussell-Melkanlage in einer Draufsicht,
- Figur 2: ein Diagramm eines Signal-Verlaufs und
- Figur 3: ein Blockschaltbild von Komponenten eines System zur Zuordnung von Tieren auf einer beweglichen Plattform

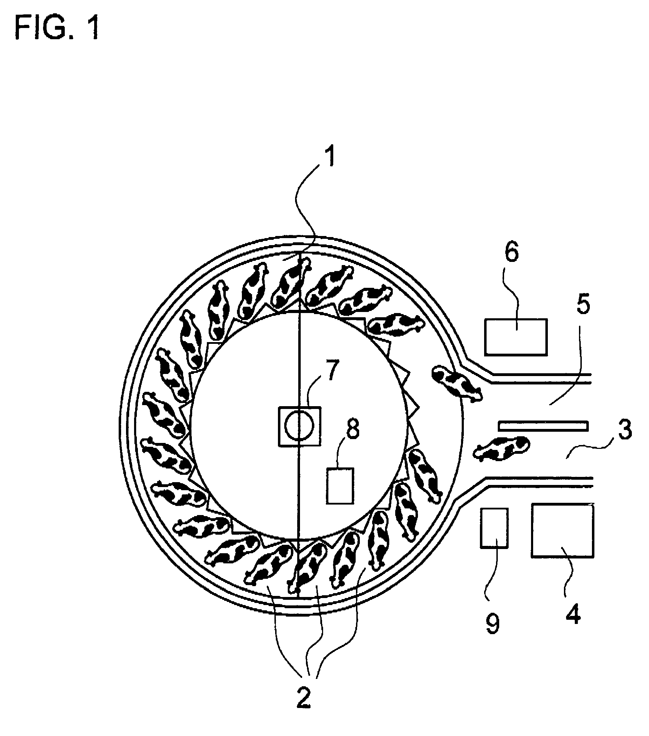

Figur 1 zeigt schematisch eine Karussell-Melkanlage. Die Karussell-Melkanlage weist eine im Wesentlichen ringförmig ausgebildete Plattform 1 auf. Auf der Plattform 1 ist eine Mehrzahl von Melkplätzen ausgebildet. Die Melkplätze 2 sind voneinander getrennt, so dass jeweils ein Tier einen Melkplatz belegen kann.

Zu der drehbaren Plattform 1 führt ein Zugangsweg 3. In diesem Zugangsweg 3 ist eine Einrichtung zur Tiererkennung 4 vorgesehen, durch die eine Identifikation einer Kuh möglich ist, wenn diese zu der Karussell-Melkanlage geht.

Ein jedes Tier verlässt die Karussell-Melkanlage über einen Ausgang 5. in dem Ausgang 5 ist eine Überwachungseinrichtung 6 angeordnet, durch die festgestellt werden kann, ob ein Tier, insbesondere eine Kuh, die Karussell-Melkanlage verließ.

In dem dargestellten Ausführungsbeispiel ist im Zentrum der Karussell-Melkanlage eine zentrale Positionserfassungseinheit 7 angeordnet, die um eine Drehachse der Plattform 1 verdrehbar ist. Die Positionserfassungseinheit 7 sowie die Plattform 1 sind derart miteinander gekoppelt, dass diese synchron miteinander verdreht werden.

Zum Bedienen der Karussell-Melkanlage ist in einem zentralen Bereich, der durch eine Bedienperson betretbar ist, ein Bedienpult 8 angeordnet. Das Bedienpult 8 kann auch Anzeigegeräte und Instrumente enthalten, aus denen die aktuelle Melksituation an einzelnen Melkplätzen abrufbar ist. Des weiteren kann an dem Bedienpult 8 der aktuelle Status der Melkanlage überprüft werden.

Zum Bereitstellen wenigstens einer Information über eine Melkplatzbelegung in der Melkanlage mit den Melkplätzen 2, die auf der beweglichen Plattform 1 angeordnet sind, ist eine Einrichtung 9 vorgesehen. Diese Einrichtung 9 ist im Bereich des Zugangs 3 positioniert. Sie dient zur Erfassung einer Bewegung eines Tieres aus einem Erkennungsbereich in Richtung eines Melkplatzes 2 auf der Plattform 1. Die Zuordnung eines Tieres zu einem Melkplatz ist somit von der Bewegung des Tieres abhängig. Die Einrichtung kann daher Sensoren aufweisen, die an kritischen Positionen der Melkanlage positioniert sind. Insbesondere ist in die Einrichtung 9 mit den Sensoren so in dem Zugangsweg 3 angeordnet, dass die Einrichtung eine Information generiert, die dem Inhalt "Tier betritt die Plattform" entspricht. Hierdurch wird eine hohe Zuordnungssicherheit eines Tieres auf einem Platz der Plattform erreicht.

Die Einrichtung kann unterschiedliche Positions- und Bewegungssensoren für das Tier aufweisen, wenn die als Informationsquelle für die Erkennung der Tierbewegung in Richtung eines Melkplatzes liefern und diese Informationen auch weiter verarbeitet werden können.

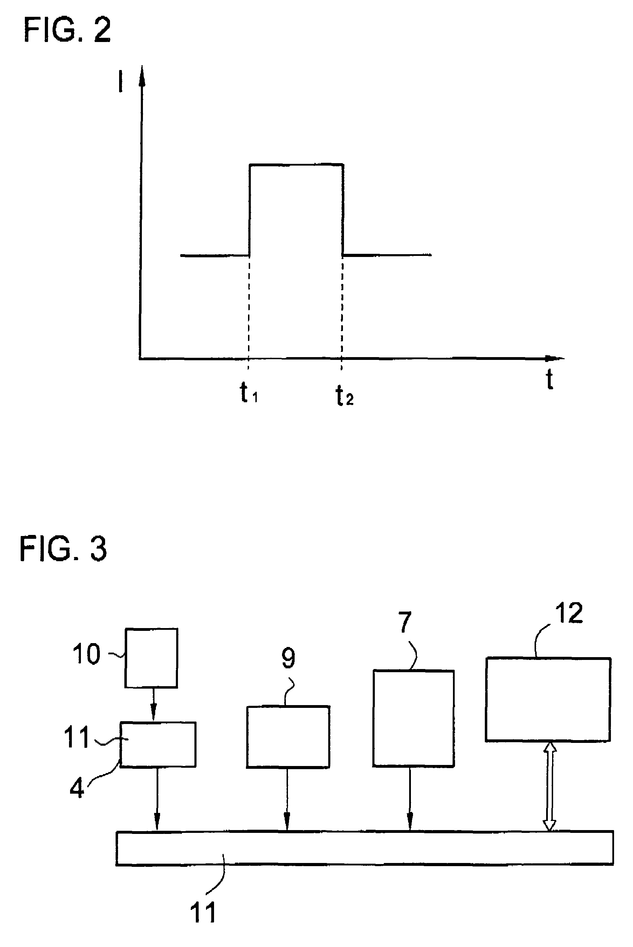

In der Figur 2 ist ein Signal-Verlauf eines Signals I dargestellt. Zum Zeitpunkt t₁ wird erkannt, dass ein Tier den Erkennungsbereich betritt. Der Zeitpunkt t₂ liefert die Information, dass das Tier den Erkennungsbereich verlässt. Die Einrichtung ist auch so ausgebildet, dass diese die Bewegungsrichtung des Tieres erkennt, um zu vermeiden, dass bei einer rückwärtigen Bewegung des Tieres, diese Bewegung unzutreffend interpretiert wird.

Ist der Zeitpunkt t₂, in dem das Tier die Plattform betritt, bekannt und die Bewegung der Plattform ebenfalls bekannt, so kann aus diesen Information eine genaue Bestimmung des Melkplatzes erfolgen, auf dem das Tier positioniert ist. Die Position der einzelnen Melkplätze zum Zeitpunkt t₂ erfolgt mittels der Positionserfassungseinheit 7. Es ist daher möglich, den Zugangsweg, zum Zeitpunkt t₂, einen bestimmten Melkplatz zuzuordnen.

Um einen guten Tierverkehr zu erzielen, ist es von Vorteil, wenn zu einem bestimmten Zeitpunkt maximal zwei Plätze teilweise offen sind. Mit Hilfe der Information über die Position und gegebenenfalls über die Geschwindigkeit der Plattform 1 kann eine Aussage über die Zuordnung eines Tieres zu einem Platz vorgenommen werden. Insbesondere können die Bewegungsrichtung der Plattform, die Anteile, zu denen die beiden sich vor dem Eingangsbereich befindlichen Plätze geöffnet sind, sowie der Belegungszustand der Plattform in Betracht gezogen werden.

Schematisch ist in der Figur 3 ein Blockschaltbild dargestellt. Das Tier, das den Zugangsweg passiert, trägt ein Tierlabel 10, welches von der Einrichtung 4 erkannt wird. Die Einrichtung 4 liefert die aus dem Tierlabel 10 ausgelesen Informationen an eine Zuordnungseinheit 11. Die aus dem Tierlabel 10 gewonnenen Informationen können an ein Herdenmanagement-System 12 weitergegeben werden, durch das Komponenten der Melkanlage aktiviert werden, um eine Aktion am Tier durchzuführen.

Mittels der Einrichtung 9 wird der Zeitpunkt ermittelt, zu dem ein Tier den Erkennungsbereich verlässt und einen Melkplatz auf der Plattform betritt. Diese Information wird der Zuordnungseinheit 11 übermittelt Darüber hinaus steht die Positionserfassungseinheit 7 zur Erfassung der Position der Plattform bzw. der Melkplätze Informationen der Zuordnungseinheit zur Verfügung, so dass diese Information in der Zuordnungseinheit 11 verarbeitet werden mit dem Ergebnis, dass eine Zuordnung eines Tieres zu einem bestimmten Melkplatz erreicht wird.

Durch die erfindungsgemäße Ausgestaltung des Verfahrens bzw. der Vorrichtung wird auch eine Unterstützung teilautomatisierter Funktionen wie der Euterreinigung oder -behandlung mit Hilfe entsprechender Automatisierungseinrichtungen erreicht. Gerade bei der Automatisierung oder Teilautomatisierung von Funktionen im Anschluss an den Eingangsbereich des Karussells bringt eine korrekte Zuordnung eines Tieres zu einem Melkplatz zu einem frühen Zeitpunkt die Möglichkeit für die Automatisierungskomponenten, die richtigen Aktionen am Tier durchzufuhren. Kann die Zuordnung erst zu einem späteren Zeitpunkt sichergestellt werden, so kann gegebenenfalls eine tierindividuell zutreffende Ausführung einer Aktion nicht erreicht werden. Es ergeben sich insbesondere im teilautomatisierten oder vollautomatisiertem Betrieb zusätzliche Randbedingungen und Unsicherheiten in der Zuordnung, welche den Betrieb erschweren. Dies wird durch die Erfindung vermieden.

Die Erfindung ist sowohl für konventionelle als auch für teil- oder halbautomatische sowie vollautomatische oder robotergestützte Mekstände anwendbar. Insbesondere ist es anwendbar für Karusselle, welche als Innenmelker oder als Außenmelker ausgelegt sind.

### BEZUGSZEICHENLISTE

- 1: Plattform
- 2: Melkplatz
- 3: Zugangsweg
- 4: Einrichtung
- 5: Ausgang
- 6: Überwachungseinrichtung
- 7: Positionserfassungseinheit
- 8: Bedienpult
- 9: Einrichtung
- 10: Label
- 11: Zuordnungseinheit
- 12: Herdenmanagement-System

## Patentansprüche

1. Verfahren zum Bereitstellen wenigstens einer Information über eine Melkplatzbelegung in einer Melkanlage mit wenigstens zwei Melkplätzen (2), die auf einer beweglichen Plattform (1) angeordnet sind, **gekennzeichnet durch** Erfassung einer Bewegung eines Tieres aus einem Erkennungsbereich in Richtung eines Melkplatzes (2).

2. Verfahren nach Anspruch 1, **gekennzeichnet durch** Erfassung eines Zeitpunktes, in dem ein Tier einen Erkennungsbereichs in Richtung eines Melkplatzes (2) verlässt.

3. Verfahren nach Anspruch 1 oder 2, bei dem ein Erfassen mittels wenigstens eines Positions- und/oder Bewegungssensors erfolgt.

4. Verfahren nach Anspruch 1,2 oder 3, bei dem ein Erfassen optisch, insbesondere mittels eines Kamerasystems erfolgt.

5. Verfahren nach einem der Ansprüche 1 bis 4, bei dem ein Erfassen mittels einer Erkennungseinheit erfolgt, wobei diese wenigstens einen Sender und wenigstens einen Empfänger umfasst.

6. Verfahren nach Anspruch 5, **dadurch gekennzeichnet, dass** wenigstens ein Tier mit wenigstens einen Sender versehen ist, der vorzugsweise auch tierindividuelle Informationen übermittelt.

7. Verfahren nach einem oder mehreren vorhergehenden Ansprüchen 1 bis 6, bei dem eine Position der Plattform (1) und/oder der Melkplätze (2) zum Zeitpunkt, in dem ein Tier einen Erkennungsbereichs () in Richtung eines Melkplatzes (2) verlässt, ermittelt wird.

8. Verfahren nach Anspruch 7, **dadurch gekennzeichnet, dass** eine Position der Plattform (1) durch eine Positionserfassungseinheit (7) bestimmt wird.

9. Verfahren nach Anspruch 7 oder 8, bei dem eine Geschwindigkeit der Plattform (1) ermittelt wird.

10. Verfahren nach Anspruch 9, bei dem die Geschwindigkeit in Abhängigkeit von der Betriebssituation an wenigstens einem Melkplatz (2) veränderbar ist.

11. Verfahren nach Anspruch 8, 9 oder 10, bei dem zur Positionsbestimmung Daten wenigstens eines Sensors (20), welcher einer Gruppe von Sensoren entnommen ist, welche Winkelsensoren (20), Winkelcodierer, absolute Winkelcodierer, inkrementale Winkelcodierer, Winkelencoder, Drehgeber und dergleichen mehr umfasst, herangezogen werden.

12. Verfahren nach Anspruch 11, bei dem die Daten einer Steuereinrichtung übermittelt werden.

13. Verfahren zum Betreiben einer Melkanlage mit wenigstens zwei Melkplätzen (2), die auf einer beweglichen Plattform (1) angeordnet sind, wobei das Verfahren nach einem der Ansprüche 1 bis 12 herangezogen wird.

14. Verfahren nach Anspruch 13, bei dem Melkplatz wenigstens eine vorzugsweise tierindividuelle Aktion durchgeführt wird.

15. Verfahren nach Anspruch 13 oder 14, wobei das Verfahren zum Betreiben einer Karussellmelkanlage eingesetzt wird.

16. Verfahren nach wenigstens einem vorstehenden Anspruch, bei dem die Erfassung der Bewegung eines Tieres auch zur Steuerung und/oder Regelung von Komponenten der Melkanlage verwendet wird.

17. Verfahren einem oder mehreren vorstehenden Ansprüchen 1 bis 16, bei dem die Daten, insbesondere die tierbezogenen Daten im Herdenmanagement gespeichert werden.

18. Vorrichtung zum Bereitstellen wenigstens einer Information über eine Melkplatzbelegung in einer Melkanlage mit wenigstens zwei Melkplätzen (2), die auf einer beweglichen Plattform (1) angeordnet sind **dadurch gekennzeichnet, dass** diese eine Einrichtung (9), die zur Erfassung einer Bewegung eines Tieres aus einem Erkennungsbereichs in Richtung eines Melkplatzes (2) geeignet und bestimmt ist, aufweist

19. Vorrichtung nach Anspruch 18, **dadurch gekennzeichnet, dass** die Einrichtung (9) Mittel zur Ermittlung eines Zeitpunktes, in dem ein Tier einen Erkennungsbereichs () in Richtung eines Melkplatzes (2)aufweist.

20. Vorrichtung nach Anspruch 18 oder 19, **dadurch gekennzeichnet, dass** die Einrichtung (9) wenigstens einen Positions- und/oder Bewegungssensor aufweist.

21. Vorrichtung nach Anspruch 18, 19 oder 20, **dadurch gekennzeichnet, dass** die Einrichtung (9) wenigstens einen optischen Sensor, insbesondere ein Kamerasystem aufweist.

22. Vorrichtung nach einem der Ansprüche 18 bis 21, **dadurch gekennzeichnet, dass** die Einrichtung (9) wenigstens eine Erkennungseinheit mit wenigstens einen Sender und wenigstens einen Empfänger aufweist.

23. Vorrichtung nach Anspruch 22, **dadurch gekennzeichnet, dass** der wenigstens eine Sender an einem Tier festlegbar ist, wobei der Sender vorzugsweise auch tierindividuelle Informationen übermittelt.

24. Vorrichtung nach einem der Ansprüche 18 bis 23, **gekennzeichnet durch** Mittel mittels derer eine Position der Plattform (1) und/oder der Melkplätze (2) zum Zeitpunkt, in dem ein Tier einen Erkennungsbereichs in Richtung eines Mekplatzes (2) verlässt, bestimmbar ist.

25. Vorrichtung nach Anspruch 24, **dadurch gekennzeichnet, dass** die Mittel wenigstens eine Positionserfassungseinheit (7), durch die eine Position der Plattform (1) durch eine Positionserfassungseinheit (7) bestimmbar ist, umfasst.

26. Vorrichtung nach Anspruch 25, **dadurch gekennzeichnet, dass** die Positionserfassungseinheit (7) wenigstens einen Sensor, der einer Gruppe von Sensoren entnommen ist, welche Winkelsensoren, Winkelcodierer, absolute Winkelcodierer, inkrementale Winkelcodierer, Winkelencoder, Drehgeber und dergleichen mehr umfasst, aufweist.

27. Melkanlage mit wenigstens zwei Melkplätzen (2), die auf einer beweglichen Plattform (1) angeordnet sind, **gekennzeichnet durch** eine Vorrichtung zum Bereitstellen wenigstens einer Information über eine Melkplatzbelegung nach einem oder mehreren vorhergehenden Ansprüchen 18 bis 26 und **durch** eine Information-Verarbeitungseinrichtung zur Verarbeitung der wenigstens einen Information.

28. Melkanlage nach Anspruch 27, **dadurch gekennzeichnet, dass** die Information-Verarbeitungseinrichtung mit einer Steuereinrichtung zusammenwirkt.

29. Melkanlage nach Anspruch 27 oder 28, **dadurch gekennzeichnet, dass** die Information-Verarbeitungseinrichtung mit einem Herdenmanagement-System (12) zusammenwirkt.

30. Melkanlage nach Anspruch 27, 28 oder 29, **dadurch gekennzeichnet, dass** diese eine Karussellmelkanlage ist.
